(19) Europäisches Patentamt / European Patent Office / Office européen des brevets

(11) **EP 4 098 623 A1**

(12) **EUROPEAN PATENT APPLICATION**
published in accordance with Art. 153(4) EPC

(43) Date of publication:
**07.12.2022 Bulletin 2022/49**

(21) Application number: **20916868.1**

(22) Date of filing: **01.12.2020**

(51) International Patent Classification (IPC):
*C01G 53/00* (2006.01)     *H01M 4/36* (2006.01)
*H01M 4/505* (2010.01)     *H01M 4/525* (2010.01)

(52) Cooperative Patent Classification (CPC):
**C01G 53/00; H01M 4/36; H01M 4/505;**
**H01M 4/525;** Y02E 60/10

(86) International application number:
**PCT/JP2020/044690**

(87) International publication number:
**WO 2021/152996 (05.08.2021 Gazette 2021/31)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **31.01.2020 JP 2020014860**

(71) Applicant: **Panasonic Intellectual Property
Management Co., Ltd.
Osaka-shi, Osaka 540-6207 (JP)**

(72) Inventors:
• **KAWAKITA Akihiro
  Osaka 540-6207 (JP)**
• **OGASAWARA Takeshi
  Osaka 540-6207 (JP)**

(74) Representative: **Novagraaf International SA
Chemin de l'Echo 3
1213 Onex, Geneva (CH)**

(54) **POSITIVE ELECTRODE ACTIVE MATERIAL FOR NONAQUEOUS ELECTROLYTE SECONDARY BATTERIES, METHOD FOR PRODUCING POSITIVE ELECTRODE ACTIVE MATERIAL FOR NONAQUEOUS ELECTROLYTE SECONDARY BATTERIES, AND NONAQUEOUS ELECTROLYTE SECONDARY BATTERY**

(57)     This positive electrode active material for non-aqueous electrolyte secondary batteries contains: a lithium transition metal composite oxide having secondary particles, each of which is formed of aggregated primary particles; and a surface modification compound which is present on at least the surfaces of the secondary particles, while containing at least one of Ca and Sr. The lithium transition metal composite oxide contains 70% by mole or more of Ni relative to the total number of moles of the metal elements excluding Li; and the total amount of Ca and Sr in the surface modification compound is 0.5% by mole or less relative to the total number of moles of the metal elements excluding Li in the lithium transition metal composite oxide.

Figure 2

## Description

TECHNICAL FIELD

The present disclosure relates to a positive electrode active material for non-aqueous electrolyte secondary batteries, a method for producing the positive electrode active material for non-aqueous electrolyte secondary batteries, and a non-aqueous electrolyte secondary battery.

BACKGROUND ART

In recent years, lithium transition metal composite oxides with high Ni content have gained attention as positive electrode active materials with high energy density. Patent Literature 1 discloses, for example, a positive electrode active material for non-aqueous electrolyte secondary batteries, which is composed of a lithium transition metal composite oxide represented by the formula $Li_xNi_yCo_zM_mO_2$ where M is an element selected from the group consisting of Ba, Sr, and B, and $0.9 \leq x \leq 1.1$, $0.5 \leq y \leq 0.95$, $0.05 \leq z \leq 0.5$, and $0.0005 \leq m \leq 0.02$, and has a BET specific surface area of 0.8 $m^2$/g or less.

Moreover, Patent Literature 2 discloses a positive electrode active material for non-aqueous electrolyte secondary batteries having an $\alpha$-NaFeO$_2$ structure and including one type or two types or more selected from the group consisting of Mn, Ni, and Co as transition metal elements, wherein an alkaline earth metal and W are present on the particle surface of the lithium transition metal composite oxide.

CITATION LIST

PATENT LITERATURE

PATENT LITERATURE 1: Japanese Unexamined Patent Application Publication No. 2003-100295
PATENT LITERATURE 2: Japanese Unexamined Patent Application Publication No. 2018-129221

SUMMARY

When using a lithium transition metal composite oxide with high Ni content as a positive electrode active material of a non-aqueous electrolyte secondary battery, there occurs a problem of breakdown of the layered crystal structure after repeated charge/discharge due to the large amount of Li extracted upon charge, resulting in lowering of capacity. The technologies disclosed in Patent Literatures 1 and 2 still have room for improvement in terms of charge/discharge cycle characteristics.

The positive electrode active material for non-aqueous electrolyte secondary batteries that is one aspect of the present disclosure includes a lithium transition metal composite oxide having secondary particles, each of which is formed of aggregated primary particles, and a surface modification compound present on at least the surfaces of the secondary particles, and including at least one of Ca and Sr. The lithium transition metal composite oxide is characterized in that it includes 70% mol% or more of Ni relative to a total number of mole of metal elements excluding Li; and a total amount of Ca and Sr in the surface modification compound is 0.5 mol% or less relative to the total number of mole of the metal elements excluding Li in the lithium transition metal composite oxide.

The method for producing a positive electrode active material for non-aqueous electrolyte secondary batteries that is one aspect of the present disclosure is characterized in including a lithium transition metal composite oxide synthesis step of mixing and calcinating a transition metal oxide including 70 mol% or more of Ni with a Li compound to obtain a lithium transition metal composite oxide; a washing step of washing the lithium transition metal composite oxide with water and dehydrating it to obtain a caky composition, and a heat treatment step of subjecting the caky composition to heat treatment to obtain the positive electrode active material for non-aqueous electrolyte secondary batteries, wherein at least one of a Ca compound and a Sr compound is added to the caky composition during the washing step or before the heat treatment step following the washing step.

The non-aqueous electrolyte secondary battery that is one aspect of the present disclosure is characterized in comprising a positive electrode including the positive electrode active material for non-aqueous electrolyte secondary batteries, a negative electrode, and a non-aqueous electrolyte.

According to the positive electrode active material for non-aqueous electrolyte secondary batteries that is one aspect of the present disclosure, a non-aqueous electrolyte secondary battery can be provided which has a high capacity inhibiting lowering of battery capacity accompanying charge/discharge.

BRIEF DESCRIPTION OF DRAWING

FIG. 1 is a cross sectional plan view of the non-aqueous electrolyte secondary battery according to an example of an embodiment.
FIG. 2 is a schematically illustrated view of the cross section of the positive electrode active material according to an example of an embodiment.
FIG. 3 is X-ray diffraction patterns of Example 18, SrO and CaO.

DESCRIPTION OF EMBODIMENTS

In a layered structure of a lithium transition metal composite oxide included in a positive electrode active material, a transition metal layer including Ni and the like, a Li layer, and an oxygen layer, and a charge/discharge reaction of the battery proceeds as Li ions in the Li layer reversibly move in and out. When using a lithium transition metal composite oxide with high Ni content, the layered structure is broken down due to the large amount of Li ions that are deintercalated from the Li layer upon battery charge, resulting in lowering of battery capacity. Moreover, the lithium transition metal composite oxide with high Ni content is highly active in the vicinity of the particle surfaces, facilitating formation of the unstable structure thereof, and thereby the reaction and the like with an electrolytic solution facilitates formation or erosion of a surface degradation layer, leading to lowering of battery capacity.

Thus, the present inventors have found, as a result of diligent experimentation to solve the aforementioned problem, that protecting the surface of lithium transition metal composite oxide with a compound including at least one of Ca and Sr can inhibit erosion of the structural degradation layer. This enabled to conceive the positive electrode active material for non-aqueous electrolyte secondary batteries in the following aspect, which inhibits lowering of battery capacity accompanying charge/discharge, while maintaining a high capacity.

The positive electrode active material for non-aqueous electrolyte secondary batteries that is one aspect of the present disclosure includes the lithium transition metal composite oxide having secondary particles, each of which is formed of aggregated primary particles, and a surface modification compound present on at least the surfaces of the secondary particles, and including at least one of Ca and Sr. The lithium transition metal composite oxide is characterized in that it includes 70 mol% or more of Ni relative to a total number of mole of metal elements excluding Li; and a total amount of Ca and Sr in the surface modification compound is 0.5 mol% or less relative to the total number of mole of metal elements excluding Li in the lithium transition metal composite oxide.

Hereinafter, examples of the embodiments of the non-aqueous electrolyte secondary battery, according to the present disclosure will be described in detail. A cylindrical battery in which a wound electrode assembly is housed in a battery case is illustrated below, however, the electrode assembly is not limited to the wound type, and it may be a stacked type in which a plurality of positive electrodes and a plurality of negative electrodes may be alternately stacked one by one with separators interposed therebetween. Moreover, the battery case is not limited to a cylindrical shape, and may be, for example, a square shape, a coin shape or the like or may be a battery case formed of a laminated sheet including a metal layer and a resin layer.

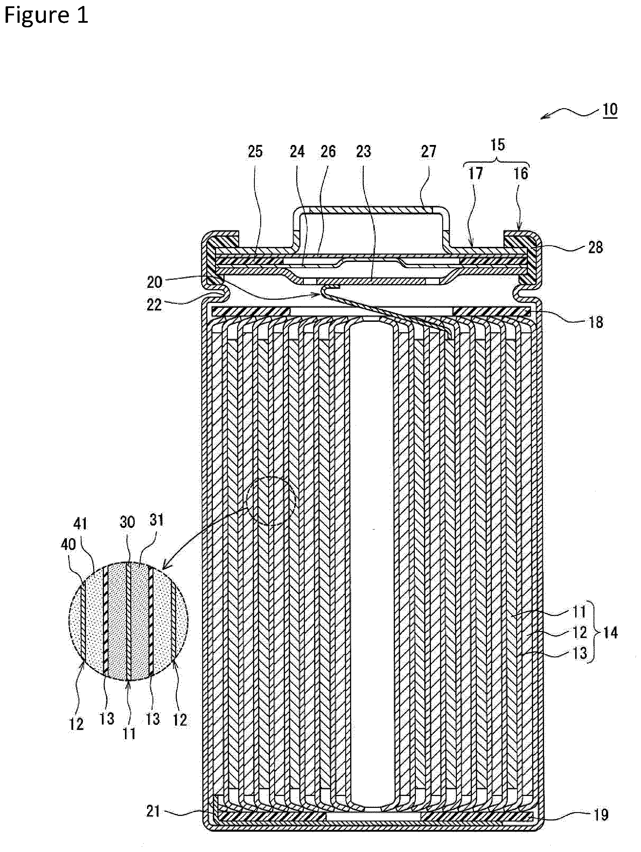

FIG. 1 is a cross sectional plan view of a non-aqueous electrolyte secondary battery 10 that is an example of the embodiment. As illustrated in FIG. 1, non-aqueous electrolyte secondary battery 10 comprises an electrode assembly 14, a non-aqueous electrolyte (not shown), and a battery case 15 that houses electrode assembly 14 and the non-aqueous electrolyte. Electrode assembly 14 has a wound structure in which a positive electrode 11 and a negative electrode 12 are wound via a separator 13. Battery case 15 is composed of a bottomed cylindrical outer can 16 and a sealing assembly 17 that seals the opening of outer can 16.

Electrode assembly 14 is composed of long positive electrode 11, long negative electrode 12, two long separators 13, a positive electrode tab 20 joined to positive electrode 11, and a negative electrode tab 21 joined to negative electrode 12. Negative electrode 12 is formed to have a size one size larger than that of positive electrode 11 in order to prevent lithium from precipitation. Namely, negative electrode 12 is formed longer than positive electrode 11 in the longitudinal direction and the width direction (short direction). Two separators 13 are formed to have sizes at least one size larger than a size of positive electrode 11, and are arranged to sandwich positive electrode 11, for example.

Non-aqueous electrolyte secondary battery 10 comprises insulating plates 18 and 19 that are arranged above and below electrode assembly 14. In the example shown in FIG. 1, positive electrode tab 20 attached to positive electrode 11 extends to the sealing assembly 17 side through the throughhole of insulating plate 18, and negative electrode tab 21 attached to negative electrode 12 passes through the outside of insulating plate 19 and extends to the bottom side of outer can 16. Positive electrode tab 20 is connected to a lower surface of a bottom plate 23 of sealing assembly 17 by welding or the like, and a cap 27 of sealing assembly 17 electrically connected to bottom plate 23 serves as a positive electrode terminal. Negative electrode tab 21 is connected to the inner surface of the bottom of outer can 16 by welding or the like, and outer can 16 serves as a negative electrode terminal.

Outer can 16 is, for example, a bottomed cylindrical metal container. Gasket 28 is arranged between outer can 16 and sealing assembly 17 and seals the internal space of battery case 15. Outer can 16 has a grooved portion 22 that supports sealing assembly 17, which is formed by pressing, for example, the side surface portion from the outside. Grooved portion 22 is preferably formed in an annular shape along the circumferential direction of outer can 16 and supports sealing assembly 17 on the upper surface of the grooved portion.

Sealing assembly 17 has a structure in which bottom plate 23, a lower vent member 24, an insulating member 25, an upper vent member 26, and cap 27 are stacked in this order from the electrode assembly 14 side. Each member constituting sealing assembly 17 has, for example, a disk shape or a ring shape, and each member except insulating member 25 is electrically connected to each other. A lower vent member 24 and an upper vent member 26 are connected to each other at the central portion thereof, and an insulating member 25 is interposed between the peripheral portions of each member. When the internal pressure of the battery rises due to abnormal heat generation, lower vent member 24 is deformed and broken so as to push upper vent member 26 toward the cap 27 side, whereby the current path between lower vent member 24 and upper vent member 26 is cut off. When the internal pressure further rises, upper vent member 26 is broken and a gas is discharged from the opening of cap 27.

Hereinafter, positive electrode 11, negative electrode 12, separator 13, and the non-aqueous electrolyte, constituting non-aqueous electrolyte secondary battery 10, will be described in detail, and in particular, the positive electrode active material included in positive electrode mixture layer 31 constituting positive electrode 11 will be described in detail.

[Positive Electrode]

Positive electrode 11 has a positive electrode current collector 30 and a positive electrode mixture layer 31 formed on both sides of positive electrode current collector 30. As positive electrode current collector 30, a foil of a metal such as aluminum or an aluminum alloy that is stable in the potential range of positive electrode 11, or a film or the like in which the metal is arranged on the surface layer, can be used. Positive electrode mixture layer 31 includes the positive electrode active material, a conductive agent, and a binder. The thickness of positive electrode mixture layer 31 is, for example, 10 $\mu$m to 150 $\mu$m on one side of the positive electrode current collector 30. Positive electrode 11 is fabricated by coating a surface of positive electrode current collector 30 with a positive electrode slurry including the positive electrode active material, the conductive agent, the binder, etc., drying the coating film, and then compressing it to form positive electrode mixture layers 31 on both sides of positive electrode current collector 30.

The conductive agent included in positive electrode mixture layer 31 that is carbon materials such as carbon black, acetylene black, Ketjen black, and graphite, can be exemplified. As the binder included in positive electrode mixture layer 31, fluororesins such as polytetrafluoroethylene (PTFE) and polyvinylidene difluoride (PVdF), polyacrylonitrile (PAN), polyimides, acrylic resins, and polyolefins can be exemplified. These resins may be combined with carboxymethyl cellulose (CMC) or a salt thereof, polyethylene oxide (PEO), or the like.

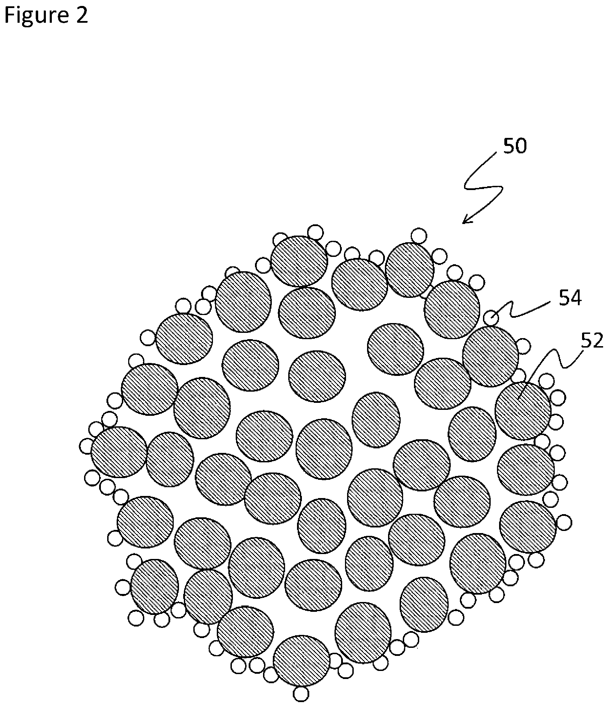

FIG. 2 is the schematically illustrated view of an example of the cross section of the positive electrode active material included in positive electrode mixture layer 31. The positive electrode active material includes the lithium transition metal composite oxide having secondary particles 50, each of which is formed of aggregated primary particles 52, and the surface modification compound 54 present on at least surfaces of secondary particles 50, and including at least one of Ca and Sr. This enables to inhibit formation and erosion of the structural degradation layer on the surface of the lithium transition metal composite oxide due to the reaction with the electrolytic solution or the like.

The secondary particle 50 is a particle having a volume-based median diameter (D50) that is preferably 3 $\mu$m to 30 $\mu$m, more preferably 5 $\mu$m to 25 $\mu$m, and particularly preferably 7 $\mu$m to 15 $\mu$m. D50 refers to a particle size in which a cumulative frequency is 50% from the smallest particle size in a volume-based particle size distribution and is also called a median diameter. The particle size distribution of the lithium transition metal composite oxide is measured by a laser diffraction type particle size distribution measuring apparatus (for example, MT3000II manufactured by MicrotracBEL Corp.) with water as a dispersion medium.

The particle size of primary particle 52 constituting secondary particle 50 is, for example, 0.05 $\mu$m to 1 $\mu$m. The particle size of primary particle 52 is measured as a diameter of a circumscribed circle in the particle image observed by scanning electron microscopy (SEM).

The layered structure of lithium transition metal composite oxide includes, for example, a layered structure belonging to a space group R-3m, a layered structure belonging to a space group C2/m, or the like. Among them, the layered structure belonging to a space group R-3m is preferred in terms of higher capacity, stability of the crystal structure, and the like. The layered structure of lithium transition metal composite oxide includes the transition metal layer, the Li layer, and oxygen layer.

The lithium transition metal composite oxide includes 70 mol% or more of Ni with respect to the total number of mole of the metal elements excluding Li, and suitably includes 80 mol% or more of Ni with respect to the total number of mole of the metal elements excluding Li. The content of Ni being 70 mol% or more enables a battery with a high capacity to be obtained. Further, the content of Ni of 80 mol% or more facilitates the effect of improving cycle characteristics due to stabilization of the structure of the lithium transition metal composite oxide to be obtained. The content of Ni is preferably 95 mol% or less. The content of Ni being more than 95 mol% results in the layered structure of lithium transition metal composite oxide being unstable.

The lithium transition metal composite oxide can be represented by the formula $Li_aNi_{1-x-y}Co_xM_yO_2$ where $0.97 \leq a \leq 1.20$, $0 \leq x \leq 0.2$, $0 \leq y \leq 0.1$, and M is at least one element selected from the group consisting of Mn, W, Mg, Mo, Nb, Ti, Si, and Al. The positive electrode active material may include a lithium transition metal composite oxide other than that represented by the above formula, or other compounds, to the extent that the purpose of the present disclosure is not impaired. The molar fraction of metal elements included in the lithium transition metal composite oxide may be determined by an inductively coupled plasma atomic emission spectrometer (ICP-AES), an electron beam microanalyzer (EPMA), an energy dispersive X-ray analyzer (EDX) or the like.

The proportion of Li in the lithium transition metal composite oxide, a satisfies $0.97 \leq a < 1.20$ and preferably satisfies $0.97 \leq a < 1.05$. When a is less than 0.97, the battery capacity may be lowered compared to the case where a satisfies the above range. When a exceeds 1.20, the charge/discharge cycle characteristics may be reduced in comparison to the case where a satisfies the above range.

Co and M where M is at least one element selected from the group consisting of Mn, W, Mg, Mo, Nb, Ti, Si, and Al, are optional components. The x and y denoting contents of Co and M with respect to the total number of mole of the metal elements excluding Li in the lithium transition metal composite oxide preferably satisfy $0 \leq x \leq 0.2$ and $0 \leq y \leq 0.1$, respectively. Co is expensive, thereby the content of Co is preferably minimized from the viewpoint of production cost.

The total amount of Ca and Sr in the surface modification compound is 0.5 mol% or less with respect to the total number of mole of the metal elements excluding Li in the lithium transition metal composite oxide. This enables to improve the charge/discharge cycle characteristics. Moreover, the total amount of Ca and Sr in the surface modification compound is preferably 0.03 mol% or more relative to the total number of mole of the metal elements excluding Li in the lithium transition metal composite oxide. The surface modification compound may include Ca in the form of the compound, for example, $CaO$, $Ca(OH)_2$, $CaCO_3$, or the like, and may include Sr in the form of the compound, for example, $SrO$, $Sr(OH)_2$, $SrCO_3$, or the like.

Ninety-five mol% of the surface modification compound may be present in a range from the surfaces of the secondary particles to a depth of the average particle diameter of the primary particles. The presence of most of the surface modification compound such as 95 mol% or more in the vicinity of the surfaces of the secondary particles of the lithium transition metal composite oxide can efficiently inhibit formation and erosion of the structural degradation layer on the surface of the lithium transition metal composite oxide due to the reaction with the electrolytic solution and the like.

Alternatively, 95 mol% or more of the surface modification compound may be present on the surfaces of the primary particles forming the surface of the secondary particle. The presence of most of the surface modification compound such as 95 mol% or more in the vicinity of the surfaces of the secondary particles of the lithium transition metal composite oxide can efficiently inhibit formation and erosion of the structural degradation layer on the surface of the lithium transition metal composite oxide due to the reaction with the electrolytic solution and the like.

The existential state of the surface modification compound in the positive electrode active material can be measured by the following procedure:

(1) The secondary particles of the positive electrode active material are processed by, for example, an ion milling apparatus (for example, IM4000PLUS manufactured by Hitachi High-Tech Corporation) to expose a cross section of the positive electrode active material.

(2) Using scanning electron microscopy, a reflection electron image of the cross section of the exposed positive electrode active material above is photographed. The magnification upon photographing of the reflection electron image is 500x to 2000x.

(3) The cross-sectional image obtained above is imported into a computer, and an image analysis software (for example, ImageJ manufactured by the U.S. National Institutes of Health) is used to measure a distribution state of the surface modification compound in terms of area. The existential state of the surface modification compound is measured from the average value measured from those of 10 positive electrode active materials.

Peaks derived from CaO and SrO are not preferably present in the X-ray diffraction pattern of the positive electrode active material by X-ray diffraction measurement. The presence of the peaks derived from CaO or SrO may lower the battery capacity or the like. Here, the X-ray diffraction pattern is obtained, for example, using a powder X-ray diffraction apparatus (product name "RINT-TTR", source: Cu-K$\alpha$, manufactured by Rigaku Corporation), according to a powder X-ray diffraction method under the following conditions.

Measurement range: 15 to 120°
Scanning speed: 4°/min

Analysis range: 30 to 120°
Background: B-spline
Profile function: Split pseudo-Voigt function
Binding condition: Li(3a) + Ni(3a) = 1
Ni(3a) + Ni(3b) = y (y is a proportion of each Ni content)
ICSD No.: 98-009-4814

Next, an example of the method for producing the positive electrode active material including the lithium transition metal composite oxide and the surface modification compound, will be described.

The method for producing the positive electrode active material for non-aqueous electrolyte secondary batteries includes a lithium transition metal composite oxide synthesis step of mixing and calcinating a transition metal oxide including 70 mol% or more of Ni with a Li compound to obtain a lithium transition metal composite oxide; a washing step of washing the lithium transition metal composite oxide with water and dehydrating it to obtain a caky composition, and a heat treatment step of subjecting the caky composition to heat treatment to obtain the positive electrode active material for non-aqueous electrolyte secondary batteries, wherein at least one of a Ca compound and a Sr compound is added to the caky composition during the washing step or before the heat treatment step following the washing step.

In the a lithium transition metal composite oxide synthesis step, for example, while stirring a solution of metal salts including Ni and arbitrary metal elements (Co, etc.), alkaline solution such as sodium hydroxide is added dropwise to adjust a pH to an alkaline side (for example, 8.5 to 12.5), allowing precipitation (coprecipitation) of a transition metal hydroxide including Ni and the arbitrary metal elements, and the transition metal hydroxide is calcinated to obtain a transition metal oxide including Ni and the arbitrary metal elements. The calcination temperature is not particularly limited, and is, for example, in the range of 300°C to 600°C.

The transition metal oxide obtained above is dry mixed with a Li compound and calcinated at the predetermined temperature for the predetermined time to obtain a lithium transition metal composite oxide. The Li compound includes, for example, $Li_2CO_3$, $LiOH$, $Li_2O$, and $LiNO_3$, $LiNO_2$, $Li_2SO_4$, $LiOH \bullet H_2O$, $LiH$, $LiF$, etc. The mixing proportion of the transition metal oxide and the Li compound is, preferably, for example, a proportion such that the molar ratio of the metal elements excluding Li and Li is in the range of 1 :0.97 to 1 :1.2, in terms of facilitating adjustment of the above parameters to the above specified ranges. Other metal raw materials may be added if necessary. The other metal raw materials are oxides or the like including metal elements other than those constituting the transition metal oxide. Moreover, the calcination of the above mixture may comprise a multi-step calcination step including, for example, a first calcination step of calcination in a calcination furnace at a first rate of temperature rise up to a first set temperature of 450°C or higher and 680°C or lower under an oxygen stream, and a second calcination step of calcinating the calcinated product obtained in the first calcination step in the calcination furnace at a second rate of temperature rise up to a second set temperature of higher than 680°C and 800°C or lower under an oxygen stream. Here, the first rate of temperature rise is in the range of 1.5°C/min or faster and 5.5°C/min or slower, and the second rate of temperature rise that is slower than the first rate of temperature rise is 0.1°C/min or faster and 3.5°C/min or slower. For the positive electrode active material of the present embodiment to be finally obtained, such multi-step calcination can adjust the existential state and the like of the surface modification compound to the ranges specified above. For the first rate of temperature rise and the second rate of temperature rise, a plurality of rates of temperature rise may be set for each temperature region provided that they are within the aforementioned specified ranges, respectively. The holding time of the first set temperature in the first calcination step is preferably 0 hours or longer and 5 hours or shorter and more preferably 0 hours or longer and 3 hours or shorter in terms of adjusting each of the above parameters of the lithium transition metal composite oxide to the aforementioned specified range. The holding time of the first set temperature is a time for maintaining the first set temperature after reaching the first set temperature. The holding time of the second set temperature in the second calcination step is preferably 1 hour or longer and 10 hours or shorter and more preferably 1 hour or longer and 5 hours or shorter, in terms of adjusting each of the above parameters of the lithium transition metal composite oxide to the aforementioned specified range. The holding time of the second set temperature is a time for maintaining the second set temperature after reaching the second set temperature. When calcinating the mixture, in order to adjust each of the above parameters to the aforementioned specified range, for example, calcination can be carried out in an oxygen stream having an oxygen concentration of 60% or more and a flow rate of the oxygen stream being set to in the range of 0.2 mL/min to 4 mL/min per 10 $cm^3$ of the calcination furnace and 0.3 L/min or more per kg of the mixture.

In the washing step, the above lithium transition metal composite oxide is washed with water and dehydrated to obtain a caky composition. The water washing can remove unreacted portions of the Li compound added in the lithium transition metal composite oxide synthesis step and impurities excluding the lithium compound. In washing with water, 300 g to 5000 g of lithium transition metal composite oxide may be introduced to 1 L of water. The water washing may be repeated multiple times. Dehydration following washing with water may be carried out, for example, by a filter press. The dehydration allows water content of the caky composition following the washing step to be 10 wt% or less. The water content of the caky composition is determined by allowing 10 g of the caky composition to stand undisturbed in a vacuum at 120°C for 2 hours for drying. The water content is calculated by dividing a weight change of the caky composition before and after drying by a weight of the caky composition before drying.

To the caky composition during the washing step or before the heat treatment step following the washing step is added at least one of the Ca compound and the Sr compound. The Ca compound includes $CaCl_2$, $Ca(OH)_2$, CaO, $CaCO_3$, $CaSO_4$, $Ca(NO_3)_2$, etc. The Sr compound includes $SrCl_2$, $Sr(OH)_2$, $Sr(OH)_2 \bullet 8H_2O$, SrO, $SrCO_3$, $SrSO_4$, $Sr(NO_3)_2$, etc. From the viewpoint of dispersibility of Ca or Sr on the surface of lithium transition metal composite oxide, a method for adding an aqueous solution in which the Ca compound or the Sr compound is dissolved, is preferred. When adding the aqueous solution, the Ca compound or the Sr compound preferably has a high solubility to water from the viewpoint of facilitating adjustment of the aqueous solution. The water content of the caky composition upon addition of the Ca compound or the Sr compound is preferably 2 wt% or more, and more preferably 4 wt% or more from the viewpoint of dispersibility of Ca or Sr on the surface of lithium transition metal composite oxide.

To the caky composition before the heat treatment step following the washing step may be added a W compound or a W-containing solution may be added. This can further inhibit formation and erosion of the structural degradation layer on the surface of the lithium transition metal composite oxide due to the reaction with the electrolytic solution, or the like, enabling the charge/discharge cycle characteristics to be improved. The Li compound remains in the caky composition before the heat treatment step following the washing step, and the remaining Li compound dissolves in the water contained in the caky composition to form an alkaline aqueous solution. When the W compound is added to the caky composition, the W compound dissolves in the alkaline aqueous solution and spreads over the entire surface of the lithium transition metal composite oxide. The W compound such as tungsten oxide ($WO_3$), lithium tungstate ($Li_2WO_4$, $Li_4WO_5$, $Li_6W_2O_9$) can be exemplified. The amount of W to be added may be 0.5 mol% or less with respect to the total number of mole of the metal elements excluding Li in the lithium transition metal composite oxide, and preferably 0.3 mol% or less. Moreover, when the W-containing solution is added to the caky composition, the W concentration of the W-containing solution is preferably, for example, 0.05 mol/L or more and preferably 0.1 mol/L to 1 mol/L. The W-containing solution is not limited as long as it includes W and is preferably a solution such that W compounds that can be easily dissolved in an alkaline solution, such as tungsten oxide, lithium tungstate, and ammonium tungstate, are dissolved in an aqueous solution of lithium hydroxide.

The heat treatment step is a step where the caky composition is heat treated at a temperature of 600°C or lower, particularly preferably 250°C or lower. The temperature is not limited as long as it is possible to evaporate water from the caky composition at 600°C or lower, and from the viewpoint of efficiency, the temperature is preferably 100°C or higher and more preferably 150°C or higher. The atmosphere in the heat treatment step can be, for example, under vacuum. The heat treatment time in the heat treatment step is not particularly limited and is preferably 0.5 to 10 hours in order to sufficiently evaporate the moisture of the caky composition.

Molar fractions of the metal elements included in the positive electrode active material obtained above are measured by inductively coupled plasma (ICP) atomic emission spectroscopy and the positive electrode active material can be represented by the formula $Li_aNi_{1-x-y}Co_xM_yCa_\alpha Sr_\beta O_2$ where $0.97 \leq a \leq 1.20$, $0 \leq x \leq 0.2$, $0 \leq y \leq 0.1$, $0 < \alpha + \beta \leq 0.005$, and M is at least one element selected from the group consisting of Mn, W, Mg, Mo, Nb, Ti, Si, and Al. Ca and Sr are included in the surface modification compound present on the surface of the lithium transition metal composite oxide.

[Negative Electrode]

Negative electrode 12 has a negative electrode current collector 40 and negative electrode mixture layers 41 formed on both sides of negative electrode current collector 40. As negative electrode current collector 40, a foil of a metal such as copper or a copper alloy that is stable in the potential range of negative electrode 12, or a film or the like in which the metal is arranged on the surface layer, can be used. Negative electrode mixture layer 41 includes a negative electrode active material and a binder. The thickness of negative electrode mixture layer 41 is, for example, 10 $\mu$m to 150 $\mu$m on one side of the negative electrode current collector 40. Negative electrode 12 can be fabricated by coating a surface of negative electrode current collector 40 with a negative electrode mixture slurry including the negative electrode active material, the binder, etc., drying the coating film, and then rolling it to form negative electrode mixture layers 41 on both sides of negative electrode current collector 40.

The negative electrode active material included in negative electrode mixture layer 41 is not particularly limited provided that it can reversibly intercalate and deintercalate lithium ions, and a carbon material such as graphite is generally used. The graphite may be any of natural graphite such as scaly graphite, massive graphite and earthy graphite, and artificial graphite such as massive artificial graphite and graphitized mesophase carbon microbeads. Moreover, as the negative electrode active material, a metal such as Si or Sn that alloys with Li, a metal compound including Si, Sn or the like, a lithium titanium composite oxide, or the like may be used. Further, such a material coated with a carbon film may be used. For example, a Si-containing compound represented by $SiO_x$ ($0.5 \leq x \leq 1.6$), a Si-containing compound in which Si fine particles are dispersed in a lithium silicate phase represented by $Li_{2y}SiO_{(2+y)}$ ($0 < y < 2$), or the like can be combined with graphite.

As the binder included in negative electrode mixture layer 41, a fluororesin such as PTFE or PVdF, a PAN, a polyimide, an acrylic resin, a polyolefin or the like may be used as in the case of positive electrode 11, however, styrene-butadiene rubber (SBR) is preferably used. Moreover, negative electrode mixture layer 41 may include CMC or a salt thereof, polyacrylic acid (PAA) or a salt thereof, polyvinyl alcohol (PVA), etc.

[Separator]

Separator 13 that is a porous sheet having ion permeability and insulating property, for example, is used. Specific examples of the porous sheet include a microporous thin membrane, a woven fabric, and a non-woven fabric. As a material of the separator 13, a polyolefin such as polyethylene or polypropylene, cellulose, or the like is suitable. Separator 13 may have a single-layer structure or a multilayer structure. Further, a resin layer having high heat resistance, such as an aramid resin, and a filler layer including a filler of an inorganic compound, may be disposed on a surface of separator 13.

[Non-Aqueous Electrolyte]

The non-aqueous electrolyte includes, for example, a non-aqueous solvent and an electrolyte salt dissolved in the non-aqueous solvent. As the non-aqueous solvent, for example, an ester, an ether, a nitrile such as acetonitrile, an amide such as dimethylformamide, or a mixed solvent of two or more of them can be used. The non-aqueous solvent may include a halogen-substituted derivative in which at least a portion of hydrogen in the solvent is substituted with a halogen atom such as fluorine. The halogen-substituted derivative includes, for example, a fluorinated cyclic carbonate such as fluoroethylene carbonate (FEC), a fluorinated chain carbonate, and a fluorinated chain carboxylic acid ester such as fluorine methyl propionate (FMP).

Examples of the aforementioned esters include cyclic carbonate esters such as ethylene carbonate (EC), propylene carbonate (PC) and butylene carbonate, chain carbonate esters such as dimethyl carbonate (DMC), ethyl methyl carbonate (EMC), diethyl carbonate (DEC), methylpropyl carbonate, ethylpropyl carbonate, and methylisopropylcarbonate, cyclic carboxylic acid esters such as $\gamma$-butyrolactone (GBL) and $\gamma$-valerolactone (GVL), and chain carboxylic acid esters such as methyl acetate, ethyl acetate, propyl acetate, methyl propionate (MP) and ethyl propionate (EP).

Examples of the aforementioned ethers include cyclic ethers such as 1,3-dioxolane, 4-methyl-1,3-dioxolane, tetrahydrofuran, 2-methyltetrahydrofuran, propylene oxide, 1,2-butylene oxide, 1,3-dioxane, 1,4-dioxane, 1,3,5-trioxane, furan, 2-methylfuran, 1,8-cineole, crown ether, and chain ethers such as 1,2-dimethoxyethane, diethyl ether, dipropyl ether, diisopropyl ether, dibutyl ether, dihexyl ether, ethyl vinyl ether, butyl vinyl ether, methyl phenyl ether, ethyl phenyl ether, butyl phenyl ether, pentyl phenyl ether, methoxy toluene, benzyl ethyl ether, diphenyl ether, dibenzyl ether, o-dimethoxybenzene, 1,2-diethoxyethane, 1,2-dibutoxyethane, diethylene glycol dimethyl ether, diethylene glycol diethyl ether, diethylene glycol dibutyl ether, 1,1-dimethoxymethane, 1,1-diethoxyethane, triethylene glycol dimethyl ether and tetraethylene glycol dimethyl ether.

The electrolyte salt is preferably a lithium salt. Examples of lithium salts include borates such as $LiBF_4$, $LiClO_4$, $LiPF_6$, $LiAsF_6$, $LiSbF_6$, $LiMnCl_4$, $LiSCN$, $LiCF_3SO_3$, $LiCF_3CO_2$, $Li(P(C_2O_4)F_4)$, $LiPF_{6-x}(C_nF_{2n+1})_x$ ($1 < x < 6$, n is 1 or 2), $LiB_{10}Cl_{10}$, $LiCl$, $LiBr$, $LiI$, lithium chloroborane, lithium lower aliphatic carboxylate, $Li_2B_4O_7$, $Li(B(C_2O_4)F_2)$, and imide salts such as $LiN(SO_2CF_3)_2$ and $LiN(C_1F_{21+1}SO_2)(C_mF_{2m+1}SO_2)$ wherein 1 and m are integers of 0 or more. The lithium salt may be used alone, or a plurality of types may be mixed and used. Among them, $LiPF_6$ is preferably used from the viewpoint of ionic conductivity, electrochemical stability, etc. The concentration of the lithium salt is, for example, 0.8 mol to 1.8 mol per 1 L of the non-aqueous solvent. Moreover, a vinylene carbonate or a propane sultone-based additive may be further added.

<Examples>

The present disclosure will be further described below with reference to Examples and Comparative Examples, but the present disclosure is not limited to the following Examples.

[Fabrication of Positive Electrode Active Material]

<Example 1>

A transition metal oxide represented by the formula $Ni_{0.91}Co_{0.045}Al_{0.045}O_2$ was mixed with lithium hydroxide monohydrate ($LiOH \bullet H_2O$) so that the molar ratio of the total amount of Ni, Co, and Al, and Li was 1: 1.03 and calcinated to obtain a lithium transition metal composite oxide. Next, in the washing step, the lithium transition metal composite oxide obtained was washed with water to obtain a caky composition. To the caky composition was added a Sr-containing aqueous solution so that Sr was 0.06 mol% relative to the total number of mole of the metal elements excluding Li in the lithium transition metal composite oxide. Furthermore, the caky composition to which this Sr was added was heat-treated in a vacuum at 200°C for 3 hours to obtain the positive electrode active material of Example 1. The amount of Sr adhered as measured by ICP-AES was 0.06 mol% relative to the total number of mole of the metal elements excluding Li.

[Fabrication of Positive Electrode]

Ninety-five parts by mass of the aforementioned positive electrode active material, 3 parts by mass of acetylene black as the conductive agent, and 2 parts by mass of polyvinylidene difluoride as the binder were mixed, and the mixture was mixed with N-methyl-2-pyrrolidone (NMP) to prepare a positive electrode slurry. Then, the surfaces of the positive electrode current collector made of aluminum foil with a thickness of 15 $\mu$m were coated with the slurry, and the coating film was dried, rolled by a rolling roller, and cut to a specified electrode size to produce a positive electrode in which positive electrode mixture layers were formed on both sides of the positive electrode core. An exposed portion of the positive electrode core with the surface exposed was arranged on a portion of the positive electrode.

[Preparation of Non-aqueous Electrolyte]

Ethylene carbonate (EC), methyl ethyl carbonate (MEC), and dimethyl carbonate (DMC) were mixed in a volume ratio of 3 :3 :4. For the mixed solvent, lithium hexafluorophosphate (LiPF$_6$) was dissolved to a concentration of 1.2 mol/liter to prepare a non-aqueous electrolyte.

[Fabrication of Test Cell]

An aluminum lead was attached to the exposed portion of the aforementioned positive electrode and a nickel lead was attached to the lithium metal foil as the negative electrode, the positive electrode and the negative electrodes were spirally wound with a polyolefin separator interposed therebetween and then press-formed in the radial direction to fabricate a flattened wound electrode assembly. The electrode assembly was housed in an outer body composed of an aluminum laminate sheet, which then was filled with the above non-aqueous electrolyte, and the opening of the outer body was sealed to obtain a test cell.

[Evaluation of Capacity Retention]

The aforementioned test cell was subjected to the following cycle test. A discharge capacity for 1st cycle of the cycle test and a discharge capacity for 30th cycle were obtained, and the capacity retention was calculated using the following formula.

$$\text{Capacity retention (\%)} = (\text{30th cycle discharge capacity} \div \text{1st cycle discharge capacity}) \times 100$$

<Cycle Test>

A constant current charge was carried out under a temperature environment of 25°C at a constant current of 0.2 It until the battery voltage reached 4.3 V, and a constant voltage charge was carried out at 4.3 V until the current value reached 1/100 It. Thereafter, a constant current discharge was carried out at a constant current of 0.2 It until the battery voltage fell down to 2.5 V. This charge/discharge cycle was repeated 30 times.

<Example 2>

A test cell was fabricated in the same manner as in Example 1 except that a Sr-containing aqueous solution was added so that Sr content was 0.03 mol% relative to the total number of mole of the metal elements excluding Li in the lithium transition metal composite oxide, during washing with water of the washing step, and the test cell was evaluated.

<Example 3>

A test cell was fabricated in the same manner as in Example 1 except that a Sr-containing aqueous solution was added during washing with water in the washing step, and the test cell was evaluated.

<Example 4>

A test cell was fabricated in the same manner as in Example 1 except that a Ca-containing aqueous solution was added so that the Ca content was 0.06 mol% relative to the total number of mole of the metal elements in the lithium transition metal composite oxide excluding Li, and the test cell was evaluated.

<Example 5>

A test cell was fabricated in the same manner as in Example 4 except that a Ca-containing aqueous solution was added during washing with water in the washing step, and the test cell was evaluated.

<Example 6>

A test cell was fabricated in the same manner as in Example 1 except that a Sr-containing aqueous solution was added so that the Sr content was 0.03 mol% relative to the total number of mole of the metal elements in the lithium transition metal composite oxide excluding Li, and a Ca-containing aqueous solution was further added so that the Ca content was 0.03 mol% relative to the total number of mole of the metal elements in the lithium transition metal composite oxide excluding Li, and the test cell was evaluated.

<Example 7>

A transition metal oxide represented by the formula $Ni_{0.91}Co_{0.045}Al_{0.045}O_2$ was mixed with lithium hydroxide monohydrate ($LiOH \bullet H_2O$) so that the molar ratio of the total amount of Ni, Co, and Al, and Li was 1: 1.03 and calcinated to obtain a lithium transition metal composite oxide. Next, during washing of the lithium transition metal composite oxide with water, a Sr-containing aqueous solution was added so that the Sr content was 0.05 mol% relative to the total number of mole of the metal elements in the lithium transition metal composite oxide excluding Li, and following filtering, $WO_3$ was further added so that the W content was 0.1 mol% relative to the total number of mole of the metal elements in the lithium transition metal composite oxide excluding Li to obtain a caky composition. Furthermore, the caky composition to which this Sr and W were added was heat-treated in a vacuum at 200°C for 3 hours to obtain the positive electrode active material of Example 7. The amounts of Sr and W adhered as measured by ICP-AES were 0.05 mol% and 0.1 mol%, respectively, relative to the total number of mole of the metal elements excluding Li.

<Example 8>

A test cell was fabricated in the same manner as in Example 7 except that to a caky composition before the heat treatment step following the washing step was added a Sr-containing aqueous solution so that the Sr content was 0.1 mol% relative to the total number of mole of the metal elements in the lithium transition metal composite oxide excluding Li, and the test cell was evaluated.

<Example 9>

A test cell was fabricated in the same manner as in Example 7 except that a Sr-containing aqueous solution was added so that the Sr content was 0.1 mol% relative to the total number of mole of the metal elements in the lithium transition metal composite oxide excluding Li, and the test cell was evaluated.

<Example 10>

A test cell was fabricated in the same manner as in Example 7 except that a Sr-containing aqueous solution was added so that the Sr content was 0.15 mol% relative to the total number of mole of the metal elements in the lithium transition metal composite oxide excluding Li, and the test cell was evaluated.

<Example 11>

A test cell was fabricated in the same manner as in Example 9 except that WO$_3$ was added so that the W content was 0.05 mol% relative to the total number of mole of the metal elements in the lithium transition metal composite oxide excluding Li, and the test cell was evaluated.

<Example 12>

A test cell was fabricated in the same manner as in Example 9 except that WO$_3$ was added so that the W content was 0.15 mol% relative to the total number of mole of the metal elements in the lithium transition metal composite oxide excluding Li, and the test cell was evaluated.

<Example 13>

A test cell was fabricated in the same manner as in Example 7 except that a Ca-containing aqueous solution was added so that the Ca content was 0.05 mol% relative to the total number of mole of the metal elements in the lithium transition metal composite oxide excluding Li, and the test cell was evaluated.

<Example 14>

A test cell was fabricated in the same manner as in Example 8 except that a Ca-containing aqueous solution was added so that the Ca content was 0.1 mol% relative to the total number of mole of the metal elements in the lithium transition metal composite oxide excluding Li, and the test cell was evaluated.

<Example 15>

A test cell was fabricated in the same manner as in Example 14 except that a Ca-containing aqueous solution was added during washing with water of the washing step, and the test cell was evaluated.

<Example 16>

A test cell was fabricated in the same manner as in Example 15 except that a Ca-containing aqueous solution was added so that the Ca content was 0.2 mol% relative to the total number of mole of the metal elements in the lithium transition metal composite oxide excluding Li, and the test cell was evaluated.

<Example 17>

A test cell was fabricated in the same manner as in Example 15 except that a Ca-containing aqueous solution was added so that the Ca content was 0.3 mol% relative to the total number of mole of the metal elements in the lithium transition metal composite oxide excluding Li, and the test cell was evaluated.

<Example 18>

A test cell was fabricated in the same manner as in Example 15 except that a Ca-containing aqueous solution was added so that the Ca content was 0.5 mol% relative to the total number of mole of the metal elements in the lithium transition metal composite oxide excluding Li, and the test cell was evaluated.

<Example 19>

A test cell was fabricated in the same manner as in Example 15 except that a Sr-containing aqueous solution was added so that the Sr content was 0.05 mol% relative to the total number of mole of the metal elements in the lithium transition metal composite oxide excluding Li and a Ca-containing aqueous solution was further added so that the Ca content was 0.05 mol% relative to the total number of mole of the metal elements in the lithium transition metal composite oxide excluding Li, and the test cell was evaluated.

<Comparative Example 1>

A test cell was fabricated in the same manner as in Example 1 except that a Sr-containing aqueous solution was not added, and the test cell was evaluated.

<Comparative Example 2>

A test cell was fabricated in the same manner as in Example 7 except that a Sr-containing aqueous solution was not added, and the test cell was evaluated.

<Comparative Example 3>

A test cell was fabricated in the same manner as in Example 15 except that a Ca-containing aqueous solution was added so that the Ca content was 0.8 mol% relative to the total number of mole of the metal elements in the lithium transition metal composite oxide excluding Li, and the test cell was evaluated.

The capacity retention of the Examples and Comparative Examples is shown in Tables 1 and 2. The evaluation results of the capacity retention shown in Tables 1 and 2 are relatively denoted with the capacity retention of each of the test cells in Comparative Examples 1 and 2 as 100%. Moreover, Tables 1 and 2 show the timing of the addition of Ca or Sr, the elements added and amounts thereof as well as the amount of W added.

[Table 1]

| | Surface modification compound | | | Amount of W added (mol%) | Capacity retention |
|---|---|---|---|---|---|
| | Ca, Sr addition | Elements | Amount (mol%) | | |
| Example 1 | After washing step | Sr | 0.06 | 0 | 101.2 |
| Example 2 | During washing step | Sr | 0.03 | 0 | 102.4 |
| Example 3 | During washing step | Sr | 0.06 | 0 | 103 |
| Example 4 | After washing step | Ca | 0.06 | 0 | 102.4 |
| Example 5 | During washing step | Ca | 0.06 | 0 | 103.6 |
| Example 6 | During washing step | Sr, Ca | Each 0.03 | 0 | 103.2 |
| Comparative Example 1 | - | - | - | 0 | 100 |

[Table 2]

| | Surface modification compound | | | Amount of W added (mol%) | Capacity retention |
|---|---|---|---|---|---|
| | Ca, Sr addition | Elements | Amount ( mol%) | | |
| Example 7 | During washing step | Sr | 0.05 | 0.1 | 102.8 |
| Example 8 | After washing step | Sr | 0.1 | 0.1 | 101.7 |
| Example 9 | During washing step | Sr | 0.1 | 0.1 | 102.3 |
| Example 10 | During washing step | Sr | 0.15 | 0.1 | 103.4 |

(continued)

| | Surface modification compound | | | Amount of W added (mol%) | Capacity retention |
|---|---|---|---|---|---|
| | Ca, Sr addition | Elements | Amount ( mol%) | | |
| Example 11 | During washing step | Sr | 0.1 | 0.05 | 102.8 |
| Example 12 | During washing step | Sr | 0.1 | 0.15 | 103.4 |
| Example 13 | During washing step | Ca | 0.05 | 0.1 | 103.4 |
| Example 14 | After washing step | Ca | 0.1 | 0.1 | 102.8 |
| Example 15 | During washing step | Ca | 0.1 | 0.1 | 104 |
| Example 16 | During washing step | Ca | 0.2 | 0.1 | 104 |
| Example 17 | During washing step | Ca | 0.3 | 0.1 | 103.4 |
| Example 18 | During washing step | Ca | 0.5 | 0.1 | 101.2 |
| Example 19 | During washing step | Sr, Ca | Each 0.05 | 0.1 | 102.9 |
| Comparative Example 2 | - | - | - | 0.1 | 100 |
| Comparative Example 3 | During washing step | Ca | 0.8 | 0.1 | 98.5 |

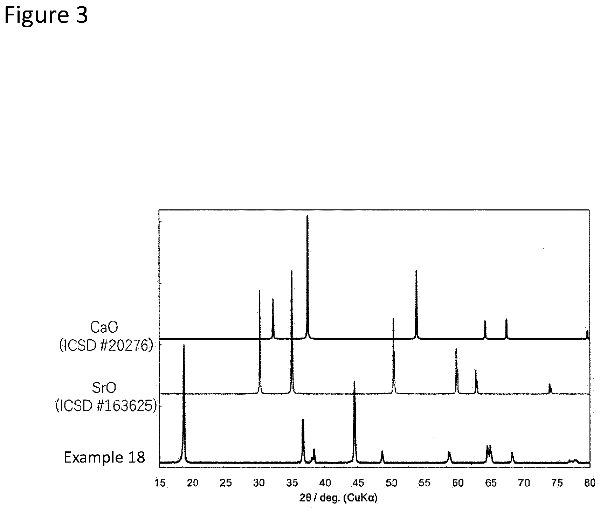

As shown in Tables 1 and 2, Examples 1 to 6 exhibited higher capacity retention than Comparative Example 1, and Examples 7 to 19 exhibited higher capacity retention than Comparative Example 2. No peaks derived from SrO and CaO were present in the X-ray diffraction patterns for any of the Examples. FIG.3 shows the X-ray diffraction patterns of Example 18, SrO and CaO as one example.

REFERENCE SIGNS LIST

10 non-aqueous electrolyte secondary battery
11 positive electrode
12 negative electrode
13 separator
14 electrode assembly
15 battery case
16 outer can
17 sealing assembly
18, 19 insulating plates
20 positive electrode tab
21 negative electrode tab
22 grooved portion
23 bottom plate
24 lower vent member
25 insulating member

26 upper vent member
27 cap
28 gasket
30 positive electrode current collector
31 positive electrode mixture layer
40 negative electrode current collector
41 negative electrode mixture layer
50 secondary particle
52 primary particle
54 surface modification compound

**Claims**

1. A positive electrode active material for non-aqueous electrolyte secondary batteries, including:

    a lithium transition metal composite oxide having secondary particles, each of which is formed of aggregated primary particles; and
    a surface modification compound present on at least surfaces of the secondary particles, and including at least one of Ca and Sr, wherein
    the lithium transition metal composite oxide includes 70 mol% or more of Ni relative to a total number of mole of metal elements excluding Li; and
    a total amount of Ca and Sr in the surface modification compound is 0.5 mol% or less relative to the total number of mole of metal elements excluding Li in the lithium transition metal composite oxide.

2. The positive electrode active material for non-aqueous electrolyte secondary batteries according to claim 1, wherein the lithium transition metal composite oxide is represented by the formula $Li_aNi_{1-x-y}Co_xM_yO_2$ where $0.97 \leq a \leq 1.20$, $0 \leq x \leq 0.2$, $0 \leq y \leq 0.1$, and M is at least one element selected from the group consisting of Mn, W, Mg, Mo, Nb, Ti, Si, and Al.

3. The positive electrode active material for non-aqueous electrolyte secondary batteries according to claim 1 or 2, wherein 95 mol% or more of the surface modification compound is present in a range from the surface of the secondary particles to a depth of an average particle diameter of the primary particles.

4. The positive electrode active material for non-aqueous electrolyte secondary batteries according to claim 1 or 2, wherein 95 mol% or more of the surface modification compound is present on a surface of the primary particles forming a surface of the secondary particle.

5. The positive electrode active material for non-aqueous electrolyte secondary batteries according to any one of claims 1 to 4, wherein no peaks derived from CaO and SrO are present in an X-ray diffraction pattern by X-ray diffraction measurement.

6. A method for producing a positive electrode active material for non-aqueous electrolyte secondary batteries, including:

    a lithium transition metal composite oxide synthesis step of mixing and calcinating a transition metal oxide including 70 mol% or more of Ni with a Li compound to obtain a lithium transition metal composite oxide;
    a washing step of washing the lithium transition metal composite oxide with water and dehydrating it to obtain a caky composition; and
    a heat treatment step of subjecting the caky composition to heat treatment to obtain the positive electrode active material for non-aqueous electrolyte secondary batteries, wherein
    at least one of a Ca compound and a Sr compound is added to the caky composition during the washing step or before the heat treatment step following the washing step.

7. A non-aqueous electrolyte secondary battery, comprising:

    a positive electrode including the positive electrode active material for non-aqueous electrolyte secondary batteries according to any one of claims 1 to 5;

a negative electrode; and
a non-aqueous electrolyte.

## Figure 1

Figure 2

# Figure 3

CaO
(ICSD #20276)

SrO
(ICSD #163625)

Example 18

15  20  25  30  35  40  45  50  55  60  65  70  75  80
2θ / deg. (CuKα)

## INTERNATIONAL SEARCH REPORT

| International application No. |
| --- |
| PCT/JP2020/044690 |

### A. CLASSIFICATION OF SUBJECT MATTER
Int.Cl. C01G53/00(2006.01)i, H01M4/36(2006.01)i, H01M4/505(2010.01)i, H01M4/525(2010.01)i
FI: H01M4/525, H01M4/505, C01G53/00A, H01M4/36C
According to International Patent Classification (IPC) or to both national classification and IPC

### B. FIELDS SEARCHED
Minimum documentation searched (classification system followed by classification symbols)
Int.Cl. C01G53/00, H01M4/36, H01M4/505, H01M4/525

Documentation searched other than minimum documentation to the extent that such documents are included in the fields searched
| | |
| --- | --- |
| Published examined utility model applications of Japan | 1922–1996 |
| Published unexamined utility model applications of Japan | 1971–2021 |
| Registered utility model specifications of Japan | 1996–2021 |
| Published registered utility model applications of Japan | 1994–2021 |

Electronic data base consulted during the international search (name of data base and, where practicable, search terms used)
CAplus/REGISTRY(STN)

### C. DOCUMENTS CONSIDERED TO BE RELEVANT

| Category* | Citation of document, with indication, where appropriate, of the relevant passages | Relevant to claim No. |
| --- | --- | --- |
| X | JP 2019-046795 A (SAMSUNG ELECTRONICS CO., LTD.) 22 March 2019 (2019-03-22), claims, paragraph [0090], example 1 | 1–7 |
| A | WO 2017/170548 A1 (BASF TODA BATTERY MATERIALS LLC) 05 October 2017 (2017-10-05), example 1 | 1–7 |
| A | JP 11-317230 A (SAMSUNG DISPLAY DEVICES CO., LTD.) 16 November 1999 (1999-11-16), claims | 1–7 |
| A | JP 10-079250 A (TORAY INDUSTRIES, INC.) 24 March 1998 (1998-03-24), examples | 1–7 |
| A | WO 2006/095594 A1 (MATSUSHITA ELECTRIC INDUSTRIAL CO., LTD.) 14 September 2006 (2006-09-14), battery Y-6 | 1–7 |

☐ Further documents are listed in the continuation of Box C.   ☒ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 15 January 2021 | 26 January 2021 |

| Name and mailing address of the ISA/ | Authorized officer |
| --- | --- |
| Japan Patent Office 3-4-3, Kasumigaseki, Chiyoda-ku, Tokyo 100-8915, Japan | Telephone No. |

Form PCT/ISA/210 (second sheet) (January 2015)

**INTERNATIONAL SEARCH REPORT**
Information on patent family members

International application No.

PCT/JP2020/044690

| JP 2019-046795 A | 22 March 2019 | US 2019/0067689 A1<br>claims, paragraphs [0117],<br>[0118], example 1<br>KR 10-2019-0024680 A |
| WO 2017/170548 A1 | 05 October 2017 | US 2019/0115596 A1<br>example 1<br>EP 3439084 A1 |
| JP 11-317230 A | 16 November 1999 | US 2002/0061444 A1<br>claims<br>KR 10-1999-0079408 A |
| JP 10-079250 A | 24 March 1998 | (Family: none) |
| WO 2006/095594 A1 | 14 September 2006 | US 2006/0204849 A1<br>battery Y-6<br>EP 1801904 A1 |

Form PCT/ISA/210 (patent family annex) (January 2015)

**EP 4 098 623 A1**

**REFERENCES CITED IN THE DESCRIPTION**

**Patent documents cited in the description**

- JP 2003100295 A

- JP 2018129221 A